# EUROPEAN PATENT APPLICATION

(11) **EP 4 102 859 A1**
(43) Date of publication of application: **14.12.2022**
(21) Application number: 21178285.9
(22) Date of filing: 08.06.2021
(51) Int. Cl.: H04S 7/00, G06F 3/16

(54) **VIRTUAL REALITY METHOD AND EQUIPMENT FOR ENHANCING THE USER'S FEELING OF IMMERSION**

(71) Applicant: Atos Information Technology GmbH, 81739 München (DE)
(72) Inventor: HORN, Andreas, 33102 Paderborn (DE)
(74) Representative: Argyma

(57) **Abstract**

A virtual reality method for generating a spatial acoustic effect (W) from a user's voice (V), the user (A) being represented by an avatar (Aᵥ) in a virtual environment (Eᵥ), the avatar (Aᵥ) comprising a sound emitting organ having a position (P) in the virtual environment (Eᵥ), the virtual environment (Eᵥ) having determined acoustic properties (S), the method comprising the steps of: recording (E1) the user's voice (V), determining (E2) the current position (P) of the avatar (Aᵥ), defining (E3) an acoustic correction (F) based on the current position (P) and on the acoustic properties (S) of the virtual environment (Eᵥ), processing (E4) the recorded voice (V) with the defined acoustic correction (F) to determine the spatial acoustic effect (W), and emitting (E5) a sound (V') comprising the spatial acoustic effect (W) to the user (A), to enhance the user's feeling of immersion.

## Description

### BACKGROUND

The present invention relates to a virtual reality method and equipment.

Virtual reality refers to a technology that simulates the physical presence of a user in a computer-generated virtual environment. Virtual reality is growing rapidly and affects more and more areas, such as architecture, learning, communication and video games.

Traditionally, a virtual reality equipment comprises a headset comprising a screen filling up the user's field of view. Images scrolling on the screen challenge the user's sight so as to make him feel immersed in the virtual environment. Traditionally, the virtual reality equipment also comprises controllers, that are usually handheld and comprise motion sensors and position tracking sensors, as well as a joystick, to enable the user to move and interact in the virtual environment.

To enhance the feeling of immersion, it is known to challenge the user's hearing thanks to earphones embedded in the headset that emit sounds of the virtual environment and sometimes insulate sounds of the user's real environment. A microphone also allows the user to speak and chat with other users.

In practice, user feedbacks show that the user experience is limited because the feeling of immersion is incomplete. In particular, it is difficult to challenge user's hearing in order to bring the user totally in the virtual environment.

The objective of the present invention is therefore to enhance the user's feeling of immersion in virtual reality.

### SUMMARY OF INVENTION

The invention relates to a virtual reality method for generating a spatial acoustic effect from a user's voice, the user being represented by an avatar in a virtual environment, the avatar comprising a sound emitting organ having a position in the virtual environment, the virtual environment comprising elements associated to determined acoustic properties, the method comprising the steps of:
- Recording the voice of the user,
- Determining the current position of the avatar in the virtual environment,
- Defining an acoustic correction based on the current position and on the acoustic properties of the virtual environment,
- Processing the recorded voice with the acoustic correction to determine the spatial acoustic effect,
- Emitting a sound comprising the spatial acoustic effect to the user, to enhance the user's feeling of immersion.

The virtual reality method according to the invention advantageously enables, when a user speaks, to rapidly generate a spatial acoustic effect that is played back to the user, so as to give him the feeling to speak in the virtual environment through his avatar. The invention thus advantageously enhances the user's feeling of immersion. Indeed, in prior art, the feeling of immersion provided by hearing is limited to sounds of the virtual environment, like the sound of wind, the sound of steps on the ground or a background music. Moreover, in prior art, when a user speaks, it is hearable that his voice comes from a real environment a priori different from the virtual environment, where the acoustic propagation is not the same. For instance, acoustic propagation differs in an indoor space and an outdoor space, in a limited space and in an extended space, in a windy space or not, etc. The invention thus brings consistency between what the user sees and hears, to increase the realism of virtual reality.

According to one aspect of the invention:
- The sound emitting organ of the avatar comprises an orientation in the virtual environment,
- The determining step is carried out by determining the current orientation of the avatar in the virtual environment,
- The defining step of the acoustic correction is based on the current orientation, on the current position and on the acoustic properties of the virtual environment.

The invention advantageously takes both in consideration the position and the orientation of the avatar, more precisely of its sound emitting organ, to determine the sound propagation of the recorded voice in the virtual environment. This allows to precisely determine both the location and the direction of the sound emission source, so as to better simulate the acoustic propagation in the virtual environment.

According to one aspect of the invention, the acoustic correction comprises an orientation correction based on the acoustic properties of at least one element located within a determined cone comprising an axis coinciding with the current orientation of the avatar. Preferably, said cone comprises an opening angle lower than 140°. Such an opening angle advantageously enables to select the relevant acoustic properties for defining the orientation correction, and thus, the acoustic correction. The relevant acoustic properties are those in the direction of the avatar's orientation, which have the most important impact on the recorded voice.

According to one aspect of the invention, the acoustic correction comprises a position correction based on the acoustic properties of at least one element located within a determined zone around the avatar. Preferably, said zone extends over less than 1000m around the avatar. Such a zone advantageously enables to select the relevant acoustic properties for defining the position correction, and thus, the acoustic correction. The relevant acoustic properties are those in the vicinity of the avatar's position, which have the most important impact on the recorded voice.

According to one aspect of the invention, the method is carried out in real-time. In other words, the user's voice is not prerecorded. The invention advantageously overcomes prima facie difficulties, namely the shortness required so as to emit an on-time output, that is, which seems natural to the user.

According to one aspect of the invention, the emitting step of the sound to the user is carried out less than 10ms after the recording step of the user's voice, preferably less than 5ms after the recording step of the user's voice. Such an output advantageously sounds natural to the user, that is, gives the user the impression to hear his own voice, without delay.

According to one aspect of the invention, the emitting step is carried out to several users. More precisely, the sound is emitted to the user whose voice is recorded as well as other users hearing the user whose voice is recorded. This allows to enhance also the feeling of immersion of the other users, by giving them the impression that the sound comes from the avatar in the virtual environment.

According to a preferred aspect, the sound emitted to the user whose voice is recorded combines the recorded voice and the spatial acoustic effect. This enables the user to hear his own voice that the virtual reality equipment, specifically the headset, isolates.

According to another preferred aspect, the sound emitted to the user whose voice is recorded is in the form of the spatial acoustic effect. This enables the user not to hear his voice twice with a time lag, namely his real voice and the record after.

Preferably, the sound emitted to the other users than the one whose voice is recorded combines the recorded voice and the spatial acoustic effect. This gives the impression to the other users that the voice they hear comes from the virtual environment.

According to one aspect of the invention, at least one acoustic property is a sound absorption coefficient of an element in the virtual environment, preferably in the following list: an area, a room, a wall, an obstacle, a piece of furniture, a tunnel, a landform, a fluid. This allows to define precisely the level of sound absorption of the different elements in the virtual environment and thus the spatial acoustic effect of a recorded voice.

According to one aspect of the invention, the spatial acoustic effect comprises at least one effect of the following list: a reverb, an echo, an attenuation, a distortion of the recorded voice. Various spatial acoustic effects are advantageously processed, so as to be typical for a type of space, such as an indoor space or an outdoor one, a limited space or a spacious one, a windy space or not. The spatial acoustic effect thus complements the images of the virtual environment to help the user to feel immersed.

The invention preferably also relates to a computer program carrying out the method as previously described.

The invention also relates to a virtual reality equipment for carrying out the method as previously described, the virtual reality equipment being configured to represent the user by an avatar in a virtual environment, the avatar comprising a sound emitting organ having a position in the virtual environment, the virtual reality equipment comprising:
- A storage unit configured to store determined acoustic properties of elements of the virtual environment,
- A sound recording unit configured to record the voice of a user,
- A processing unit configured to:
   ∘ Determine the current position of the avatar in the virtual environment,
   ∘ Define an acoustic correction based on the current position and on the acoustic properties of the virtual environment, and
   ∘ Process the recorded voice with the acoustic correction to determine the spatial acoustic effect,
- A sound emitting unit configured to emit to the user a sound comprising the spatial acoustic effect, to enhance the user's feeling of immersion in the virtual environment.

The virtual reality equipment according to the invention advantageously allows to generate and emit a spatial acoustic effect from a user's recorded voice, without any particular dedicated element to add compared to a traditional virtual reality equipment. No additional cost, mass or energy-consumptive element is required.

### BRIEF DESCRIPTION OF DRAWINGS

The invention will be better understood by reading the description that follows, only given as an example, and by referring to the appended figures in which:
FIG. 1 is a schematic view of a virtual reality equipment and a user's avatar generated by the virtual reality equipment according to one aspect of the invention;
FIG. 2 is a schematic top view of a virtual environment generated by the virtual reality equipment from FIG. 1;
FIG.3 is a schematic view of a virtual reality method for generating a spatial acoustic effect from a user's voice according to one aspect of the invention;
FIG. 4A is a schematic view of a recording step of the user's voice in the virtual reality method from FIG. 3;
FIG. 4B and
FIG. 4C are two schematic views of a determining step of the avatar's position and a defining step of an acoustic correction in the virtual reality method from FIG. 3;
FIG. 4D is a schematic view of the processing step of a spatial acoustic effect in the virtual reality method from FIG. 3;
FIG. 4E is a schematic view of the emitting step of a sound to the user in the virtual reality method from FIG. 3;
FIG. 5 is a schematic view of the virtual reality method carried out in the context of a real estate visit by a potential buyer, according to one aspect of the invention;
FIG. 6A,

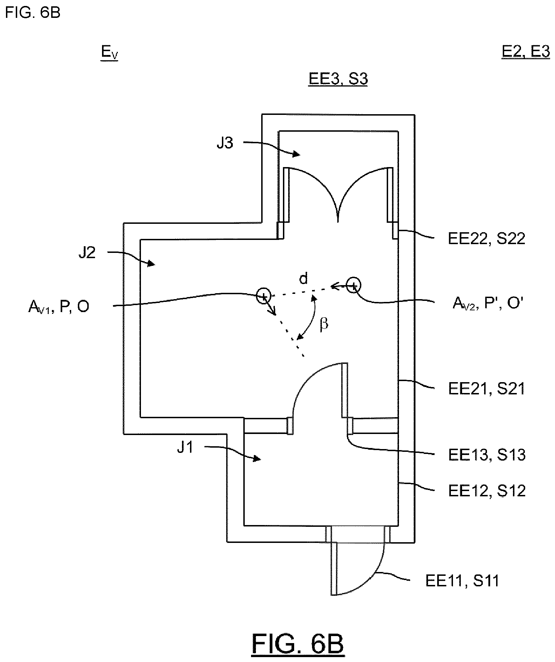

FIG. 6B and

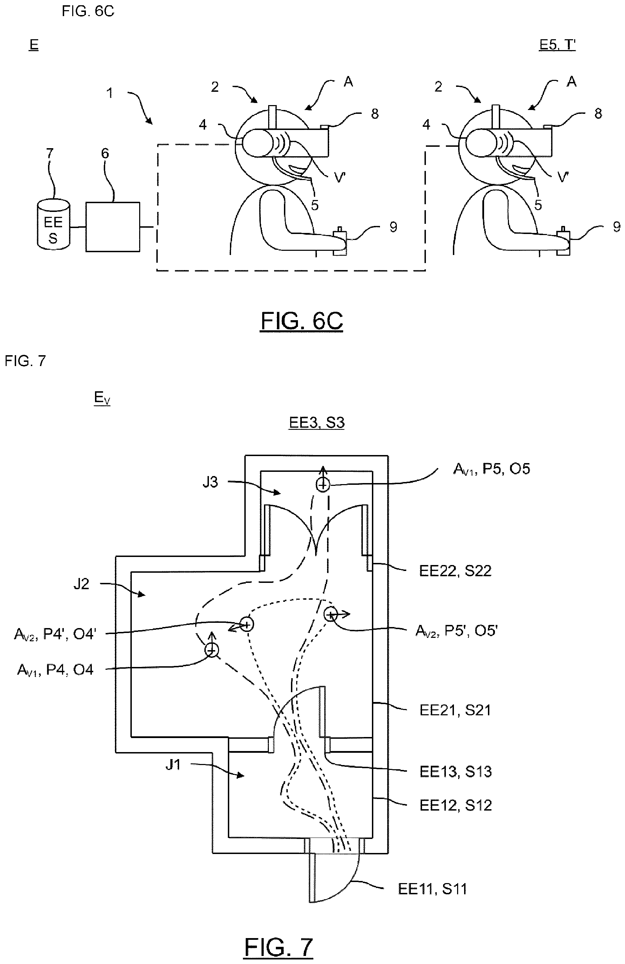

FIG. 6C are three schematic views of the virtual reality method according to another aspect of the invention with several users;
FIG. 7 is a schematic view of the virtual reality method carried out in the context of a real estate visit by two potential buyers, according to one aspect of the invention;

It should be noted that the figures set out the invention in a detailed manner to implement the invention. Said figures can also be used to better define the invention if need be.

### DESCRIPTION OF EMBODIMENTS

The present invention relates to virtual reality and aims at generating a spatial acoustic effect from a user's voice, so as to enhance the user's feeling of immersion in a virtual environment.

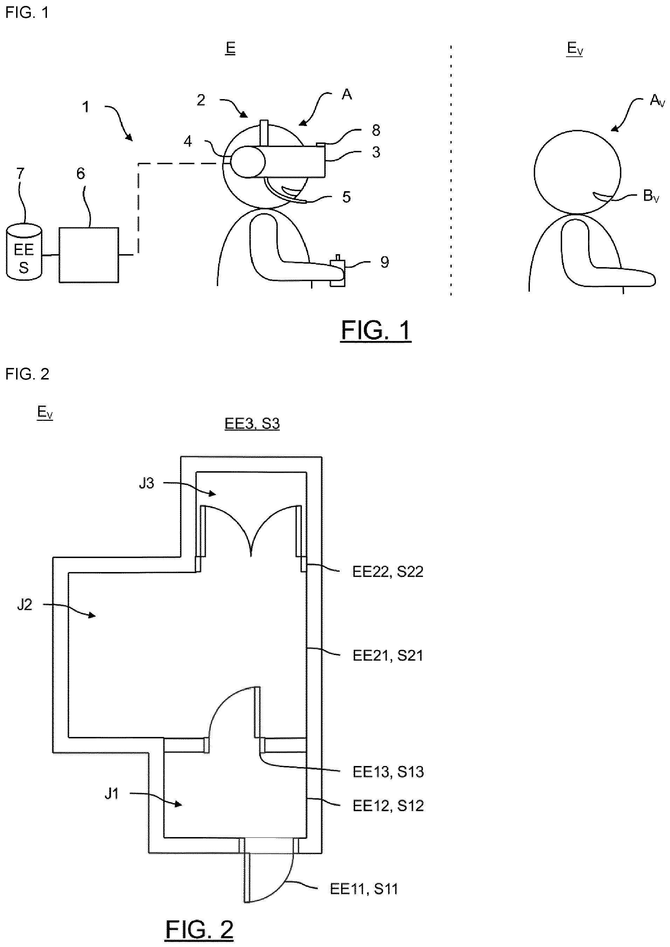

As illustrated in figure 1 and known in the prior art, virtual reality refers to a technology that simulates the physical presence of a user A in a computer-generated virtual environment E_{V}. More precisely, the user A is equipped in a real environment E with a virtual reality equipment 1 that brings him into a virtual environment E_{V}, where he is represented by an avatar A_{V} with a sound emitting organ B_{V}. In the example of figure 1A, the avatar A_{V} is in the form of a human and the sound emitting organ B_{V} is the mouth of the avatar A_{V}. It goes without saying that the avatar A_{V} could be any creature or/and the sound emitting organ B_{V} could be different from a mouth.

As illustrated in figure 1, the virtual reality equipment 1 comprises a headset 2 and controllers 9 connected to a processing unit 6, such as a computer, and a storage unit 7, such as a database or memory. The connection is either wireless or wired. The storage unit 7 is either embedded in the processing unit 6 or independent. In some configurations, the processing unit 6 is embedded in the headset 2. As seen in figure 1, the headset 2 comprises a screen 3 filling up the user's field of view, earphones 4 and a microphone 5. In some configurations, the screen 3 is mounted detachably in the headset 2. In an example, a smartphone can comprise the screen 3 and the processing unit 6. The screen 3 and the earphones 4 respectively provide a visual and an auditive feeling of immersion by emitting images and sounds of the virtual environment E_{V}. Preferably, the earphones 4 also insulate sounds from the user's real environment E. The microphone 5 records the user's voice and allows the user A to speak and chat with other users. Still referring to figure 1, the controllers 9 are usually handheld and comprise motion sensors and position tracking sensors, as well as a joystick, to enable the user A to interact and move in the virtual environment E_{V} through his avatar A_{V}. In practice, as seen in figure 1, the virtual reality equipment 1 also comprises an orientation sensor 8, such as a gyro sensor, to determine the user's orientation and apply it to the avatar A_{V} in the virtual environment E_{V}.

A further description of the virtual reality equipment 1 is not provided as it is known by a person skilled in the art. It goes without saying that the earphones 4 and the microphone 5 could respectively be any sound emitting unit and any sound recording unit. The sound emitting unit 4 and the sound recording unit 5 could also be independent from the headset 2. The same goes for the orientation sensor 8 which is, in this example, embedded in the headset 2.

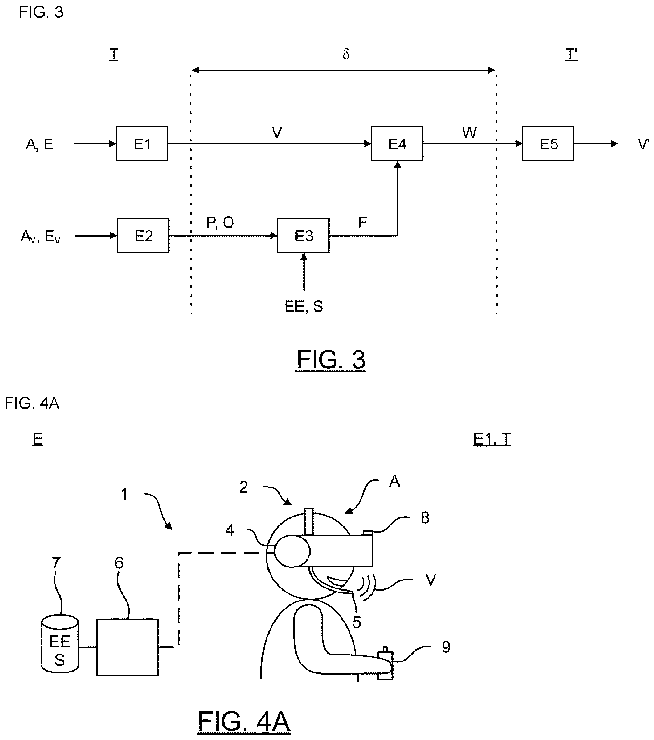

Referring to figure 2, the virtual reality equipment 1 generates a virtual environment E_{V} in which the avatar A_{V} moves and interacts. Depending on the area in which the invention is used (architecture, learning, communication, video games, etc.), the virtual environment E_{V} could be any form and comprises several elements EE (figure 3) such as an area, a room, a wall, an obstacle, a piece of furniture, a tunnel, a landform, a fluid, etc. It goes without saying that there could be other elements EE than those cited.

As illustrated in figure 2, each element EE of the virtual environment E_{V} comprises intrinsic acoustic properties S that are defined and stored in the storage unit 7. Preferably, acoustic properties S are in the form of sound absorption coefficients of the elements EE, notably based on the material and the size of the elements EE.

In the example of figure 2, the virtual environment E_{V} is in the form of a real estate comprising a hall J1, a living room J2 and a terrace J3 defining each one or several elements EE. More precisely, in this example, the hall J1 comprises an entry door E11, walls E12 and an inner door E13 each associated to an acoustic property S11, S12, S13. The living room J2 comprises walls E21 and a double door E22 leading to the terrace J3, each associated to an acoustic property S21, S22. In the terrace J3, windy air E3 is defined, associated to an acoustic property S3. It goes without saying that acoustic properties S of other elements EE could be added, such as furniture, windows, a landscape on which the terrace J3 opens, a mountain, a street, another real estate, etc.

The virtual environment E_{V} is computer generated, the size, the position, the shape and the acoustic properties S of each element EE being determined. Preferably, for reducing the computing cost, several elements EE have the same acoustic properties S.

According to the invention and as illustrated in figure 3, the virtual reality equipment 1 carries out the following virtual reality method, from determined acoustic properties S of elements EE of the virtual environment E_{V}, which comprises the steps of:
- Recording E1 the voice V of the user A,
- Determining E2 the current position P of the sound emitting organ B_{V} of the avatar A_{V} in the virtual environment E_{V},
- Defining E3 an acoustic correction F based on the current position P and on the acoustic properties S of the virtual environment E_{V},
- Processing E4 the recorded voice V with the defined acoustic correction F to determine the spatial acoustic effect W,
- Emitting E5 a sound V' comprising the spatial acoustic effect W to the user A, to enhance the user's feeling of immersion in the virtual environment E_{V}.

Moreover, according to a preferred aspect of the invention:
- The determining step E2 is carried out by also determining the current orientation O of the avatar A_{V} in the virtual environment E_{V},
- The defining step E3 of the acoustic correction F is also based on the current orientation O.

Such a virtual reality method thus enables, from a user's voice V record in the real environment E, to generate a spatial acoustic effect W that gives the user A the impression to speak through his avatar A_{V} in the virtual environment E_{V}. The user A can hear the spatial acoustic effect W which depends on the virtual environment E_{V} which is similar as in the real life. The computer-generated virtual environment E_{V} mimics perfectly the real environment E.

This has the effect of enhancing the feeling of immersion, in particular its auditive part. The acoustic properties S allow to take into account the acoustic propagation in the virtual environment E_{V} and to process the recording voice V so that the emitted sound V' fits to the virtual environment E_{V}. Moreover, as illustrated in figure 3, the acoustic correction F is advantageously easily and quickly defined, so as to emit in real time the sound V' to seem natural to the user A, in practice at an emitting time T' posterior to a recording time T from less than a period δ of 5 to 10ms.

More precisely, as illustrated in figure 4A, before carrying out the virtual reality method, the acoustic properties S of the different elements EE of the virtual environment E_{V} are determined and stored in the storage unit 7 of the virtual reality equipment 1. The virtual reality method begins with the recording step E1, wherein the voice V of the user A is recorded by the microphone 5, or alternatively by any recording unit of the virtual reality equipment 1. Preferably, the voice V is recorded in real-time at a recording time T. In other words, the voice V is not prerecorded. At the end of the recording step E1, the recorded voice V is transmitted to the processing unit 6.

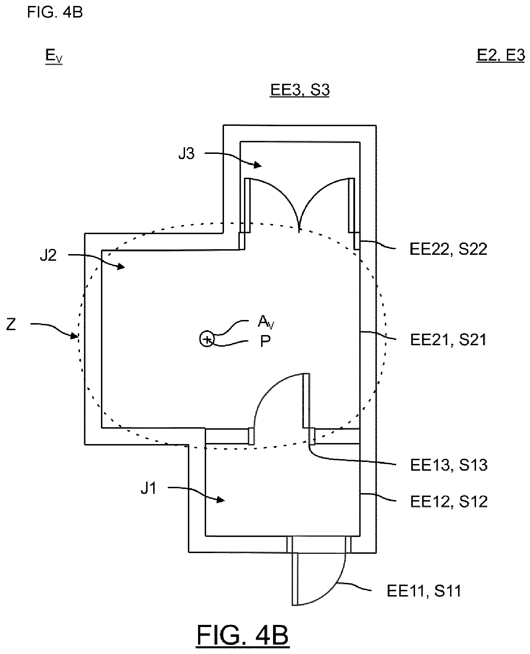

Referring to figure 4B, the recording step E1 is followed by the determining step E2, wherein the current position P of the sound emitting organ B_{V} of the avatar A_{V} in the virtual environment E_{V} is determined. In practice, the current position P corresponds to the position of the avatar A_{V} at the recording time T, that is, when the user A is speaking. Preferably, the current position P is determined from the joystick 9 and transmitted to the processing unit 6.

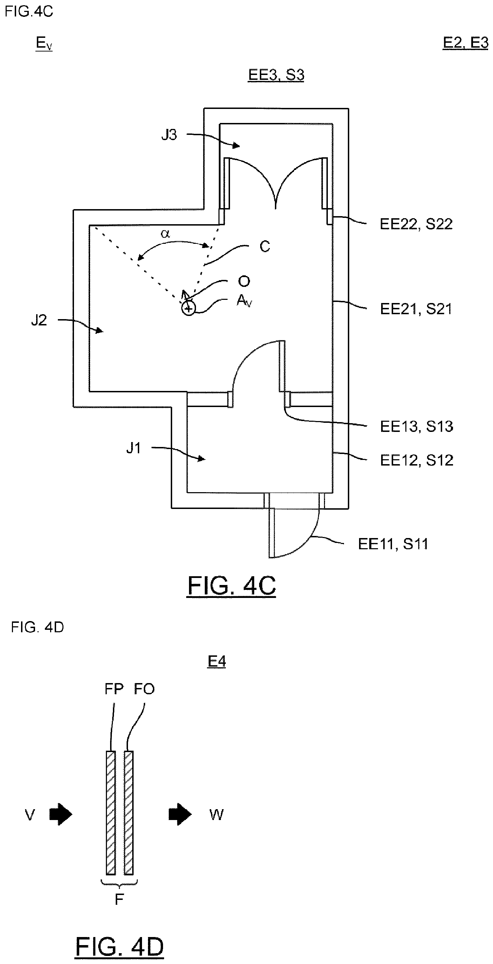

Referring to figure 4C, in a preferred manner, the current orientation O of the sound emitting organ B_{V} of the avatar A_{V} in the virtual environment E_{V} is also determined during the determining step E2. Similarly, the current orientation O corresponds to the orientation of the avatar A_{V} at the recording time T, that is, when the user A is speaking. Preferably, the current orientation O is determined from the orientation sensor 8 and transmitted to the processing unit 6. At the end of the determining step E2, the processing unit 6 has following data: the recorded voice V, the current position P and orientation O as well as the acoustic properties S of the elements EE in the virtual environment E_{V}.

Referring to figures 4B, 4C and 4D, thanks to previous data, the processing unit 6 then carries out the defining step E3 of the acoustic correction F. The acoustic correction F is a tool representing the acoustic propagation in the virtual environment E_{V} which is based on the acoustic properties S of the elements EE in the virtual environment E_{V}. The acoustic correction F depends of the location of the avatar A_{V} in the virtual environment E_{V}, namely the emission source of the recorded voice V. Preferably, the acoustic correction F is defined locally to be precise. Advantageously, such an acoustic correction F doesn't require a lot of computing resources, which allows to determine the acoustic correction F in real-time.

The acoustic correction F defines different acoustic parameters such as the echo, reverb, delay, attenuation, distortion, etc.

According to one aspect, referring to figures 4B and 4D, the acoustic correction F comprises a position correction FP which only takes into account the acoustic properties S of elements EE located in the vicinity of the avatar A_{V}. Preferably, the position correction FP is based on the acoustic properties S of elements EE located within a determined zone Z around the position P of the avatar A_{V}, said zone Z preferably extending over less than 1000m or being predetermined for an area, for example, for the hall J1, the living room J2, etc.. Preferably, the extension of the predetermined zone Z depends of the volume of the recorded voice V. This enables to select the more relevant elements EE for the position correction FP, namely the elements EE likely to have an effect on the acoustic propagation of the recorded voice V in the virtual environment E_{V}.

For example, for a large empty room, the position correction FP comprises an important echo value.

According to a preferred aspect, referring to figures 4C and 4D, the acoustic correction F comprises an orientation correction FO based on the acoustic properties S of elements EE located within a determined cone C comprising an axis which coincides with the orientation O of the avatar A_{V}. Such a cone C extends in 3D in the virtual environment E_{V} and is represented in 2D in figure 4C only for reasons of simplification. Preferably, said cone C comprises an opening angle α lower than 140°. More preferably, the opening angle α depends of the frequency of the recorded voice V. This enables to select the more relevant elements EE for the orientation correction FO, namely the elements EE susceptible to have an effect on the acoustic propagation of the recorded voice V in the virtual environment E_{V}. For example, depending on the orientation O, the orientation correction FO can have different reverb values.

In this example, the acoustic correction F is a combination of the position correction FP and the orientation correction FO, but it goes without saying that other specific corrections could be added. The acoustic correction F is computed and can be applied digitally.

Referring to figure 4D, after the defining step E3 is completed, the processing unit 6 then implements the processing step E4 to determine the spatial acoustic effect W. More precisely, the defined correction F is used to process the recorded voice V of the user A, the spatial acoustic effect W corresponding to the result obtained. The spatial acoustic effect W thus corresponds to the acoustic answer of the virtual environment E_{V} once the voice V is emitted at a particular location. Such a spatial acoustic effect W is advantageously processed in real-time and doesn't require a lot of computing resources.

In practice, the spatial acoustic effect W comprises one or more of the following effects: a reverb, an echo, an attenuation, a distortion of the recorded voice V. For example, if the avatar A_{V} is in a big area, with little furniture and/or high ceiling, the spatial acoustic effect W will comprise an important echo effect, the intensity and the length of the echo depending of the recorded voice V and the acoustic properties S of the virtual environment E_{V}. A similar spatial acoustic effect W will be generated if the avatar A_{V} is located in the mountains or in a tunnel. As another example, if the avatar Aᵥ is in a windy space, the spatial acoustic effect W will comprise a distortion and/or an attenuation effect of his voice V. As another example, a spatial acoustic effect W will comprise a reverb effect if the avatar A_{V} speaks according to a precise orientation. All the possible spatial acoustic effects W advantageously give the user A some hearing information about the virtual environment E_{V} that complement and/or match with visual information coming from the screen 3. It goes without saying that for certain locations of the avatar A_{V} (for instance, far from a reflective surface and in a closed medium or small area) and/or certain virtual environments E_{V} (for instance, in space), there could be no spatial acoustic effect W generated.

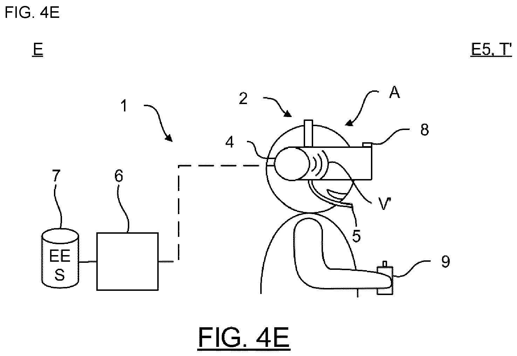

As illustrated in figure 4E, during the emitting step E5, a sound V' comprising the spatial acoustic effect W is emitted to the user A by the earphones 4 of the virtual reality equipment 1, or any sound emitting unit. Preferably, the sound V' both comprises the recorded voice V and the spatial acoustic effect W. Indeed, this allows the user A to hear his own voice since the headset 2, in particular the earphones 4, entirely or partly insulate noises from the real environment E. Alternatively, in particular in the absence of insulation, the sound V' is in the form of the spatial acoustic effect W only, in order to avoid the user A to hear his voice V twice, namely his real voice V and after the recorded one.

Preferably, the sound V' is emitted less than 5 to 10ms after the voice V is recorded to seem natural to the user A. In other words, the user A has the impression that he speaks through his avatar A_{V} directly in the virtual environment E_{V}. The virtual reality method is thus a real-time method which requires a few computing resources and advantageously enhances the user's feeling of immersion. In practice, the virtual reality method is implemented each time the user A speaks to generate a spatial acoustic effect W.

The virtual reality method is hereafter described in the context of a virtual visit of a real estate, corresponding to the virtual environment E_{V} described above in reference to figure 2, by a potential buyer, corresponding to the user A. It goes without saying that this application is only an example and that the invention can be used in various areas, such as architecture, learning, communication and video games.

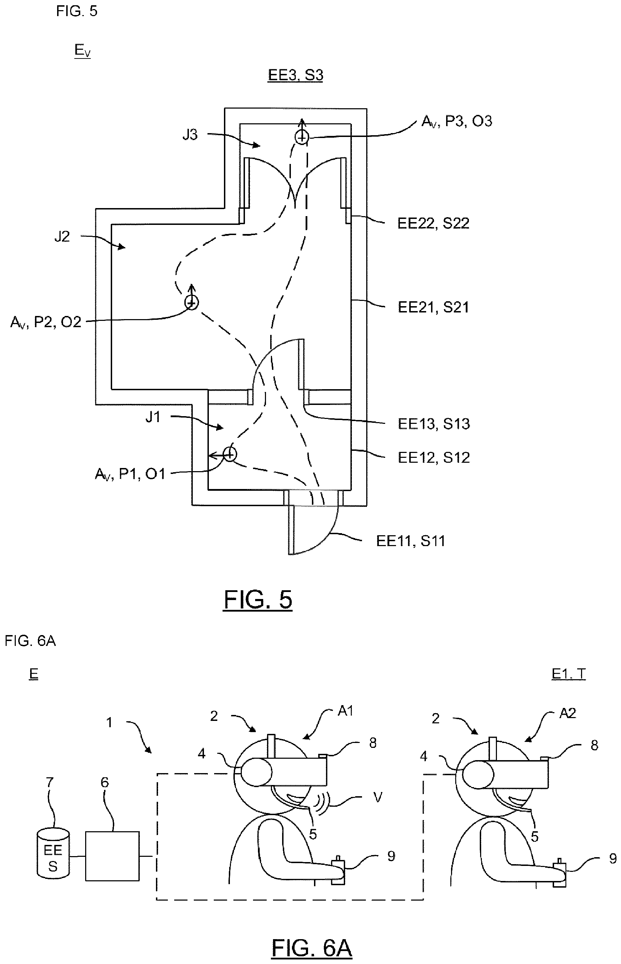

Referring to figure 5, the user A -through his avatar A_{V}- starts the visit by entering into the hall J1. His voice V is recorded as he is located in front of one wall EE12 at a first position P1 and with a first orientation O1. For such a first position P1, the position correction FP is based on the acoustic properties S11, S12, S13 of elements located in the hall J1, namely the entry door E11, the different walls EE12 and the inner door E13 in this example. For such a first orientation O1, the orientation correction FO is based on the acoustic properties S12 of the wall EE12 in front of which the avatar A_{V} speaks. The correction F obtained generates a spatial acoustic effect in the form of an attenuation from the wall EE12 which is played to the user A.

Still referring to figure 5, the virtual reality method is implemented a second time as the user A visits the living room J2. His voice V is recorded as he is located at a second position P2 roughly in the center of the living room J2 and at a second orientation O2 in the direction of the terrace J3. For such a second position P2, the position correction FP is based on the acoustic properties S13, S21, S22 of elements located in the living room J2, namely the inner door E13, the different walls EE21 and the double door E22 in this example. For such a second orientation O2, the orientation correction FO is based on the acoustic properties S21 of the wall EE21 to which he is standing. The spatial acoustic effect W generated is in the form of an echo, which advantageously gives the user A the impression to be in a large space, in addition to the visual. The user A sees a large space but also hears that the space is large. The immersion is increased.

Still referring to figure 5, the user A concludes his visit on the terrace J3 where there is windy air EE3. The defined correction F generates a spatial acoustic effect W in the form of a distortion, which advantageously gives the user A the impression of fresh and open air, in addition to the visual.

Figures 6A, 6B and 6C illustrate another aspect of the invention with several users A1, A2 wherein, during the emitting step E5, the sound V' comprising the spatial acoustic effect W is emitted to each user A1, A2. In other words, the sound V' is emitted both to the user A1 whose voice V is recorded, called the "speaker", and to the other user(s) A2 whose voice is not recorded, called the "listener(s)". Preferably, the sound V' emitted to each listener A2 both comprises the recorded voice V and the spatial acoustic effect W. It goes without saying that the virtual reality method can be implemented several times with different speakers and listeners and that a speaker during one implementation can be a listener in another implementation. Such an emitting step E5 advantageously gives each listener A2 the impression, that the speaker A1 speaks directly through his avatar A1_{V} in the virtual environment Eᵥ. The feeling of immersion is particularly enhanced when the users A1, A2 are chatting together, since they have the impression to chat through their avatars A1_{V}, A2_{V} and not in the real environment E as in the prior art.

According to a preferred aspect, referring to figures 6B and 6C, the sound V' emitted to each listener A2 depends also of the distance d between the speaker A1 and the listener A2. In practice, the current position P' of the avatar A2_{V} of each listener A2 is also determined during the determining step E2 and used for the step of defining E3 the correction F. More precisely, the correction F for generating the sound V' emitted to each listener A2 also comprises an attenuation coefficient that varies proportionally with the distance d between the positions P, P' of the speaker A1 and each listener A2 at the recording time T. Thus, when a listener A2 is distant from the speaker A1, the sound V' emitted to the listener A2 is attenuated. Moreover, when a listener A2 is in front from the speaker A1, the sound V' emitted to the listener A2 is not attenuated

Preferably, referring to figures 6B and 6C, the sound V' emitted to each listener A2 depends also of the angle β between the orientation O of the speaker A1 and the orientation O' of the listener A2. In practice, the current orientation O' of the avatar A2_{V} of each listener A2 is also determined during the determining step E2 and used for the step of defining E3 the correction F. More precisely, the attenuation coefficient varies proportionally with the angle β between the orientation O of the speaker A1 and the orientation O' of the listener A2 at the recording time T. Thus, when a listener A2 faces the speaker A1, the sound V' emitted to the listener A2 is not attenuated. Moreover, when a listener A2 doesn't face the speaker A1, the sound V' emitted to the listener A2 is attenuated.

Figure 7 illustrates the implementation of the virtual reality method in the case of two different users A1, A2. The first user A1 is the user A from the example of figure 5 which comes back for a second visit of the real estate forming the virtual environment E_{V}. The second user A2 accompanies the first user A1 to give him his impression on the real estate. During their visit, the first user A1 asks twice the second user A2 about his opinion of the real estate, namely in the living room J2 at a fourth position P4 and a fourth orientation O4 and then on the terrace J3 at a fifth position P5 and a fifth orientation O5.

The virtual reality method is thus implemented a first time in the living room J2 wherein the current position P4' and orientation O4' of the second user A2 is determined. In this example, the second user A2 faces roughly the first user A1 at a short distance and the sound emitted V' is the same for the first user A1 and the second user A2.

The virtual reality method is then implemented a second time on the terrace J3. The second user A2 is during the recording step E1 located in the living room J2 at a position P5' distant from the one of the first user A1 and an orientation O5' facing a wall EE21 of the living room J2. The sound emitted V' to the second user A2 is in this example attenuated compared to the one emitted to the first user A1. The second user A2 thus hears the first user A1 less loudly even if both users are located next to each other in the real environment E, as in the example of figures 6A and 6C. This advantageously enhances the feeling of immersion of both users A1, A2.

## Claims

1. A virtual reality method for generating a spatial acoustic effect (W) from a user's voice (V), the user (A) being represented by an avatar (A_{V}) in a virtual environment (E_{V}), the avatar (A_{V}) comprising a sound emitting organ (B_{V}) having a position (P) in the virtual environment (E_{V}), the virtual environment (E_{V}) comprising elements (EE) associated to determined acoustic properties (S), the method comprising the steps of:
• Recording (E1) the voice (V) of the user (A),
• Determining (E2) the current position (P) of the avatar (A_{V}) in the virtual environment (E_{V}),
• Defining (E3) an acoustic correction (F) based on the current position (P) and on the acoustic properties (S) of the virtual environment (E_{V}),
• Processing (E4) the recorded voice (V) with the acoustic correction (F) to determine the spatial acoustic effect (W),
• Emitting (E5) a sound (V') comprising the spatial acoustic effect (W) to the user (A), to enhance the user's feeling of immersion in the virtual environment (E_{V}).

2. The method according to claim 1, wherein:
• The sound emitting organ (B_{V}) of the avatar (A_{V}) comprises an orientation (O) in the virtual environment (E_{V}),
• The determining step (E2) is carried out by determining the current orientation (O) of the avatar (A_{V}) in the virtual environment (E_{V}),
• The defining step (E3) of the acoustic correction (F) is based on the current orientation (O), on the current position (P) and on the acoustic properties (S) of the virtual environment (E_{V}).

3. The method according to claim 2, wherein the acoustic correction (F) comprises an orientation correction (FO) based on the acoustic properties (S) of at least one element (EE) located within a determined cone (C) comprising an axis coinciding with the current orientation (O) of the avatar (A_{V}).

4. The method according to one of claims 1 to 3, wherein the acoustic correction (F) comprises a position correction (FP) based on the acoustic properties (S) of at least one element (EE) located within a determined zone (Z) around the avatar (A_{V}).

5. The method according to one of claims 1 to 4, wherein the method is carried out in real time.

6. The method according to one of claims 1 to 5, wherein the emitting step (E5) of the sound (V') to the user (A) is carried out less than 10ms after the recording step (E1) of the user's voice (V), preferably less than 5ms after the recording step (E1) of the user's voice (V).

7. The method according to one of claims 1 to 6, wherein the emitting step (E5) is carried out to several users (A1, A2).

8. The method according to one of claims 1 to 7, wherein at least one acoustic property (S) is a sound absorption coefficient of an element (EE) in the virtual environment (E_{V}), preferably in the following list: an area, a room, a wall, an obstacle, a piece of furniture, a tunnel, a landform, a fluid.

9. The method according to one of claims 1 to 8, wherein the spatial acoustic effect (W) comprises at least one effect of the following list: a reverb, an echo, an attenuation, a distortion of the recorded voice (V).

10. A virtual reality equipment (1) for carrying out the method according to one of claims 1 to 9, the virtual reality equipment (1) being configured to represent the user (A) by an avatar (A_{V}) in a virtual environment (E_{V}), the avatar (A_{V}) comprising a sound emitting organ (B_{V}) having a position (P) in the virtual environment (E_{V}), the virtual reality equipment (1) comprising:
• A storage unit (7) configured to store determined acoustic properties (S) of elements (Z) of the virtual environment (E_{V}),
• A sound recording unit (5) configured to record the voice (V) of a user (A),
• A processing unit (6) configured to:
∘ Determine the current position (P) of the avatar (A_{V}) in the virtual environment (E_{V}),
∘ Define an acoustic correction (F) based on the current position (P) and on the acoustic properties (S) of the virtual environment (E_{V}), and
∘ Process the recorded voice (V) with the acoustic correction (F) to determine the spatial acoustic effect (W),
• A sound emitting unit (4) configured to emit to the user (A) a sound (V') comprising the spatial acoustic effect (W), to enhance the user's feeling of immersion in the virtual environment (E_{V}).
